# EUROPÄISCHE PATENTSCHRIFT

(11) **EP 0 712 005 B1**
(45) Veröffentlichungstag und Bekanntmachung des Hinweises auf die Patenterteilung: **02.10.2002**
(21) Anmeldenummer: 95117202.2
(22) Anmeldetag: 02.11.1995
(51) Int. Cl.: G01P 15/09

(54) **Piezoelektrischer Beschleunigsaufnehmer**
Piezoelectric acceleration sensor
Capteur d'accélération piézo-électrique

(30) Priorität: 10.11.1994 DE 4440078
(43) Veröffentlichungstag der Anmeldung: 15.05.1996
(73) Patentinhaber: Conti Temic Microelectronic GmbH, 90411 Nürnberg (DE)
(72) Erfinder: Ohgke, Thomas, D-73230 Kirchheim (DE); Nägele, Dieter, D-73230 Kirchheim (DE); Brinks, Gerald, D-88483 Burgrieden (DE); Weinacht, Manfred, D-73265 Dettingen (DE); Tiederle, Viktor, D-73265 Dettingen (DE)
(74) Vertreter: Maute, Hans-Jürgen, Dipl.-Ing.

(56) Entgegenhaltungen:
- WO-A-91/13364
- WO-A-93/13426
- DE-A- 2 846 371

## Beschreibung

Die Erfindung betrifft einen piezoelektrischen Beschleunigungsaufnehmer, insbesondere zur Verwendung in Sicherheitseinrichtungen für Kraftfahrzeuge gemäß dem Oberbegriff des Patentanspruches 1 bzw. 2.

Ein solcher Beschleunigungsaufnehmer ist aus der WO 93 13 426 A bekannt, bei dem das Biegeelement als langgestreckter Balken ausgebildet ist und der auf der einen Seite eine erste Elektrode und auf der anderen Seite eine zweite und dritte voneinander elektrisch isolierte Elektroden aufweist. Dieses Biegeelement wird in seinem Mittelabschnitt von einem Träger unterstützt, der aus drei elektrisch leitfähigen fingerförmigen bzw. kammartigen Elektroden besteht, welche die erste, zweite bzw. dritte Elektrode zur Herstellung einer elektrischen Verbindung kontaktieren. Diese Elektroden werden auf die Oberfläche eines Objekts, dessen Beschleunigung zu messen ist, geführt, indem die das Biegeelement kontaktierenden fingerförmigen Elektroden in die Ebene dieser Oberfläche gebogen und dort als Leitbahn fortgeführt werden. Zwecks Mehrmoden-Messung ist der Träger so ausgebildet, dass das Biegeelement einen Winkel mit der Oberfläche bildet, der kleiner als 90° ist. Steht dagegen dieses Biegeelement senkrecht auf der Oberfläche, liegt ein Monomoden-Beschleunigungsmesser vor.

Derartige Beschleunigungsaufnehmer weisen als Sensorelement ein an einer Referenzstelle mechanisch eingespanntes Biegeelement aus piezoelektrischem Material, beispielsweise eine Piezokeramik, bzw. eine Anordnung aus mehreren solchen Biegeelementen auf. Das Biegeelement wird bei auf dieses wirkenden Kräften oder Beschleunigungen ausgelenkt, wobei aufgrund des piezoelektrischen Effektes eine Spannung an den Elektroden des Biegeelementes entsteht, die der Kraft bzw. der Beschleunigung proportional ist.

Für den Einsatz in Sicherheitsvorrichtungen von Kraftfahrzeugen eignen sich insbesondere sogenannte Serien-Bimorph-Biegesensoren, die aus einem Verbund von mehreren Keramikbalken mit gerader Anzahl bestehen, auf deren Außenseiten üblicherweise elektrisch hochleitfähige Beschichtungen als Außenelektroden aufgebracht sind. Es ist bekannt, solche Bimorph-Biegesensoren mittels eines Trägers auf einem in einem Gehäuse untergebrachten Substrat derart anzuordnen, dass die Hauptempfindlichkeitsachse des Biegeelementes senkrecht auf der Ebene des Substrates steht.

Die Verwendung des bekannten Beschleunigungsaufnehmers aus der WO 93 13 426 A für Automotiv-Anwendungen erfordert ein aufwendiges Herstellungsverfahren aufgrund der fingerartigen bzw. kammartigen Struktur des das Biegeelement aufnehmenden Trägers, der aus wenigstens drei einzelnen Teilen besteht.

Der Erfindung liegt daher die Aufgabe zugrunde, einen piezoelektrischen Beschleunigungsaufnehmer der eingangs genannten Art anzugeben, der einfach herstellbar ist.

Diese Aufgabe wird gemäß der Erfindung durch die Merkmale des Patentanspruches 1 bzw. 2 gelöst.

Demgemäß besteht der Träger aus zwei plattenförmigen Trägerteilen, zwischen denen das Biegeelement angeordnet ist. Dabei ist der Träger mechanisch derart mit dem Substrat verbunden, dass die Hauptempfindlichkeitsachse in der Ebene dieses Substrates liegt. Im Kontaktbereich der beiden Trägerteile mit den Außenelektroden des Biegeelementes ist gemäß der ersten Lösung eine elektrisch leitende Schicht aufgebracht, die auf den Trägerteilen bis in den Bereich der mechanischen Kontaktstelle eines Trägerfußes dieser Trägerteile mit dem Substrat geführt ist, wobei diese mechanische Kontaktstelle als stumpfe mechanische Verbindung mit dem Substrat ausgerührt ist und gleichzeitig als elektrische Kontaktstelle ausgebildet ist. Somit wird über die mechanische Kontaktstelle des Trägers mit dem Substrat gleichzeitig auch die elektrische Verbindung hergestellt, so daß eine zusätzliche Bondverbindung entfällt. Dies trifft auch für die zweite Lösung zu, wo die beiden Trägerteile im Unterschied zur ersten Lösung aus elektrisch leitendem Material hergestellt werden und somit keine elektrisch leitende Schicht erforderlich ist. Der aus Biegeelement und Träger bestehende Verbund ist in einem Gehäuse untergebracht, aus dem senkrecht zum Substrat stehende Anschlußstifte geführt sind, die direkt - ohne Zwischenschaltung einer Halte- und Kontaktvorrichtung - mit einer Leiterplatte verbunden werden.

Ein weiterer Vorteil ergibt sich durch die thermische Entkopplung zwischen dem Verbund aus Biegeelement und Träger und der Umgebung des Beschleunigungsaufnehmers, da durch den zur Ebene des Substrates senkrechten Aufbau ein hoher Wärmewiderstand zwischen dem Substrat bzw. dem Gehäuse des Beschleunigungsaufnehmers und dem Biegeelement erreicht wird. Ferner können aufgrund des symmetrischen Aufbaues des Verbundes der pyroelektrische Effekt bei Temperaturänderungen nahezu unterdrückt werden, so daß nahezu ein pyroelektrisch neutraler Biegesensor vorliegt. Schließlich ist aufgrund des erfindungsgemäßen Aufbaues des aus Trägerteil und Biegeelement bestehenden Sensors auch dessen Biegeempfindlichkeit sehr gering, da die Wirkungen von Formänderungen am Gehäuse des Beschleunigungsaufnehmers nahezu nicht auf den Verbund aus Biegeelement und Träger übertragen werden.

Bei einer vorteilhaften Ausführungsform der Erfindung besteht jedes Trägerelement aus einem über das Biegeelement geführten balkenförmigen Teil, das in den Trägerfluß übergeht, dessen Ende der Stirnseite stumpf auf der Substratebene steht. Die mechanische als auch die elektrische Verbindung zwischen den Trägerelementen, also den Trägerfüßen und dem Substrat wird als Lotverbindung oder mittels eines elektrisch leitfähigen Klebers ausgeführt.

Weitere vorteilhafte Ausführungsformen der Erfindung sind den Ansprüchen 5 und 6 zu entnehmen.

Im folgenden ist die Erfindung anhand eines Ausführungsbeispieles eines piezoelektrischen Beschleunigungsaufnehmers anhand von Zeichnungen dargestellt und erläutert. Es zeigen:
Figuren 1a, 1b und 1c eine schematische Aufsicht bzw. Ansicht eines Beschleunigungsaufnehmers gemäß der Erfindung,
Figur 2 eine schematische Ansicht der Kontaktstelle des Substrates mit dem Träger des Biegeelementes nach Figur 1a,
Figuren 3a und 3b eine schematische An- bzw. Aufsicht eines Trägerteils gemäß dem Ausführungsbeispiel nach Figur 1a.

Ein piezoelektrischer Bimorph-Biegesensor 1 ist aus zwei balkenähnlichen Biegeelementen 1a und 1b aufgebaut. Die beiden Biegeelemente 1a und 1b stellen Piezokeramiken dar, die jeweils in den Figuren nicht dargestellte Außenelektroden aufweisen. Der Biegesensor 1 ist mittig zwischen zwei Trägerteilen 2a und 2b - einen Träger 2 bildend - derart eingespannt, dass bei Einwirkung von Beschleunigungen oder Kräften die beiden freien Enden des Biegesensors 1 ausgelenkt werden können. Deshalb bestehen die identisch ausgebildeten Trägerteile 2a und 2b aus einem balkenförmigen Teil 21, der jeweils mittig über den Biegesensor 1 geführt ist, und einem an den balkenförmigen Teil 21 sich anschließenden Trägerfuß 22, der die mechanische Verbindung zu einem Substrat 3 herstellt. Die beiden Trägerteile 2a und 2b sind plattenförmig mit einer Dicke von ca. 1 mm ausgebildet, wobei der balkenförmige Teil 21 ca. 2,5 mm und der Trägerfuß 22 ca. 6 mm breit ist. Die Trägerteile sind aus elektrisch nichtleitendem Material, insbesondere aus Keramik gefertigt.

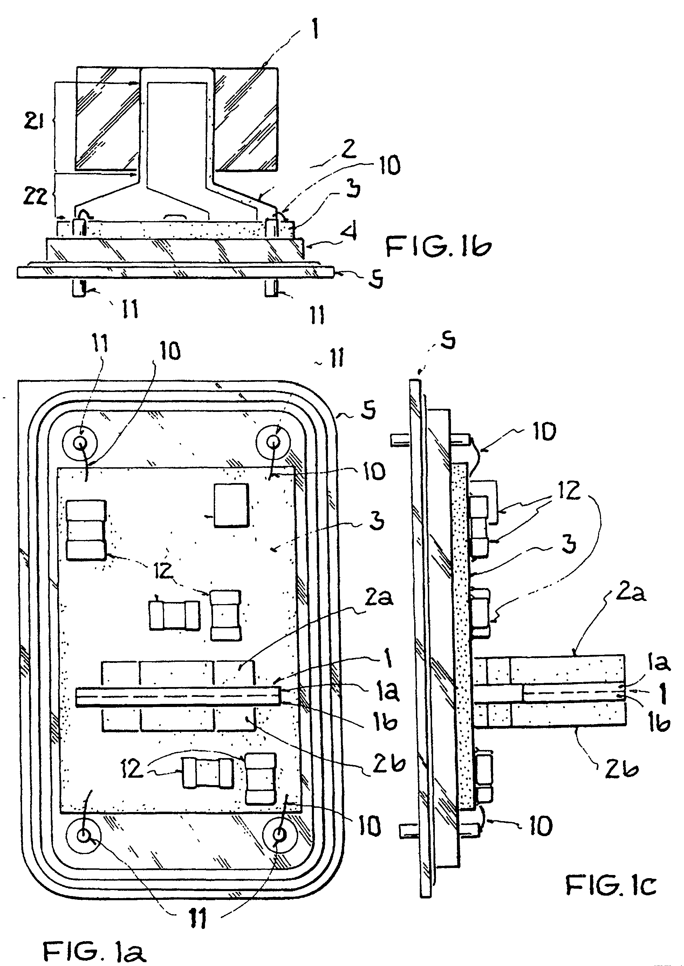

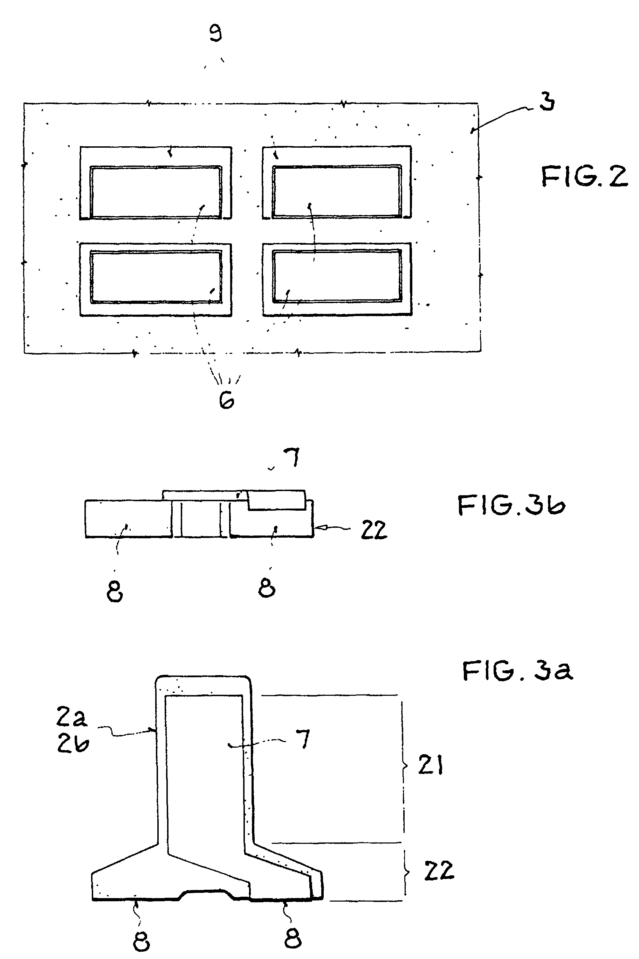

Wie in den Figuren 1a bis 1c dargestellt ist, ist der Verbund aus dem Träger 2 und dem Biegesensor 1 senkrecht zur Ebene des Substrates 3 angeordnet, so daß die Hauptempfindlichkeitsachse des Biegesensors 1 in der Ebene des Substrates 3 liegt. Hierzu wird das Substrat 3 über Kontaktstellen 6 gemäß Figur 2 mit den Trägerelementen 2a und 2b über deren Stirnseiten 8 gemäß den Figuren 3a und 3b stumpf verbunden. Gemäß den Figuren 3a und 3b ist im Bereich der Symmetrieachse des Trägerfußes 22 eine Ausnehmung vorgesehen, so daß stirnseitig zwei Auflageflächen entstehen. Somit sind für den Träger 2 vier Kontaktstellen 6, wie es in Figur 2 dargestellt ist, erforderlich. Auf der dem Biegesensor 1 zugewandten Seite der Trägerteile 2a und 2b ist eine Metallisierung 7 vorgesehen, die sowohl den balkenförmigen Teil 21 als auch teilweise den Trägerfuß 22 bedeckt und bis auf eine stirnseitige Berührungsfläche 8 des Fußes 22 geführt ist. Da nun auch die Kontaktbereiche 6 auf dem Substrat 3 jeweils als Leitbahn 9 enden, wird über diese Kontaktbereiche 6 nicht nur die mechanische Verbindung, sondern gleichzeitig auch die elektrische Verbindung zu dem Biegesensor 1 hergestellt. Die Verbindung kann daher entweder als Lötverbindung oder mittels eines elektrisch leitfähigen Klebers hergestellt werden. Die Metallisierung auf den Trägerfüßen der beiden Trägerteile 2a und 2b ist so ausgeführt, daß die elektrische Kontaktierung bezüglich den vier im Quadrat angeordneten Kontaktbereichen 6 nach Figur 2 über Kreuz erfolgt, um hierdurch Kurzschlüsse zu vermeiden.

Das Substrat 3 besteht aus Keramik und dient zur weiteren Aufnahme von Bauelementen 12, die über auf dem Substrat 3 geführten Leitbahnen verbunden sind. Dieses Keramiksubstrat 3 ist seinerseits auf eine aus Metall, Keramik oder Kunststoff bestehende Grundplatte 4 aufgebracht, die an den Stirnseiten des Substrates 3 übersteht, um dort jeweils zwei Steckerpins 11 vorzusehen, die über Bondverbindungen 10 mit der Schaltung auf dem Substrat 3 verbunden sind. Schließlich ist die Anordnung aus Substrat 3 und Grundplatte 4 auf einem Gehäuseboden 5 angeordnet, wobei die Steckerpins 11 isolierend durch die Grundplatte 4 und diesen Gehäuseboden 5 geführt sind. Zur Vervollständigung des mechanischen Aufbaues des Beschleunigungsaufnehmers dient ein in den Figuren nicht dargestelltes Gehäuse, das über den Aufbau auf der Grundplatte 4 gestülpt wird und bündig mit dem Gehäuseboden 5 abschließt, um ein hermetisch dichtes Gehäuse zu erhalten.

Es ist auch möglich, die Grundplatte 4 und den Gehäuseboden einstückig herzustellen.

Der so als Bauteil fertiggestellte Beschleunigungssensor kann nun auf einer die Auswerteelektronik tragenden Leiterplatte angeordnet werden, in dem die Steckerpins zur Herstellung einer Lötverbindung in entsprechende Lötaugen eingeführt werden, um gleichzeitig eine Kraftkopplung zur Leiterplatte und die elektrische Verbindung herzustellen.

Die Trägerteile 2a und 2b des Trägers 2 können auch aus Metall, beispielsweise Kovar hergestellt werden, wodurch eine Metallisierung entfällt.

Der Beschleunigungssensor gemäß des Ausführungsbeispieles stellt einen eindimensionalen Beschleunigungssensor dar. Zur Detektion der Beschleunigung in der Ebene kann ebenfalls ein zweidimensionaler Sensor aufgebaut werden, wenn auf dem Substrat zwei aus jeweils einem Biegesensor 1 und einem Träger 2 bestehende Verbunde angeordnet werden, die in einem bestimmten Winkel zueinander stehen.

## Patentansprüche

1. Piezoelektrischer Beschleunigungsaufnehmer, insbesondere zur Verwendung in Sicherheitseinrichtungen für Kraftfahrzeuge, bestehend aus einem Verbund aus einem aus piezoelektrischem Material bestehenden, Außenelektroden aufweisenden Biegeelement (1), das von einem auf einem Substrat (3) montierten Träger (2) in einer Lage gehalten wird, in der die Hauptempfindlichkeitsachse des Biegeelementes (1) in einer zum Substrat (3) parallelen Ebene liegt, wobei das Substrat (3) Mittel zur Herstellung einer elektrischen Verbindung mit auf dem Substrat angeordneten Kontaktstellen (6) aufweist, mit folgenden Merkmalen:
a) der Träger (2) besteht aus zwei plattenförmig ausgebildeten Trägerteilen (2a, 2b) zwischen denen das Biegeelement (1) angeordnet ist, welches jeweils auf seinen gegenüberliegenden Seiten eine Außenelektrode aufweist,
b) jedes Trägerteil (2a, 2b) umfasst einen Trägerfuß (22) mit einer ein freies Ende des Trägerteils (2a, 2b) bildenden Stirnseite (8), die mit auf dem Substrat (3) angeordneten Kontaktstellen (6) eine stumpfe, T-förmige mechanische Verbindung bildet,
c) die beiden Trägerteile (2a, 2b) weisen im Kontaktbereich mit den Außenelektroden des Biegeelementes (1) eine elektrisch leitende Schicht (7) auf,
d) zur Herstellung der elektrischen Verbindung mit dem Substrat (3) ist die elektrisch leitende Schicht (7) auf den Trägerteilen (2a, 2b) bis zur mechanischen Kontaktstelle der Trägerteile (2a, 2b) mit dem Substrat (3) geführt und
e) die mechanischen Kontaktstellen (6) auf dem Substrat (3) sind als elektrische Kontaktstellen ausgebildet.

2. Piezoelektrischer Beschleunigungsaufnehmer, insbesondere zur Verwendung in Sicherheitseinrichtungen für Kraftfahrzeuge, bestehend aus einem Verbund aus einem aus piezoelektrischem Material bestehenden, Außenelektroden aufweisenden Biegeelement (1), das von einem aus elektrisch leitenden Material bestehenden, auf einem Substrat (3) montierten Träger (2) in einer Lage gehalten wird, in welcher die Hauptempfindlichkeitsachse des Biegeelementes (1) in einer zum Substrat (3) parallelen Ebene liegt, und der Träger (2) eine elektrische Verbindung mit auf dem Substrat (3) angeordneten Kontaktstellen (6) herstellt, mit folgenden Merkmale:
a) der Träger (2) besteht aus zwei plattenförmig ausgebildeten Trägerteilen (2a, 2b) zwischen denen das Biegeelement (1) angeordnet ist, welches jeweils auf seinen gegenüberliegenden Seite eine Außenelektrode aufweist, und
b) jedes Trägerteil (2a, 2b) umfasst einen Trägerfuß (22) mit einer ein freies Ende des Trägerteils (2a, 2b) bildenden Stirnseite (8), die mit auf dem Substrat (3) angeordneten Kontaktstellen (6) eine stumpfe, T-förmige mechanische Verbindung bildet.

3. Piezoelektrischer Beschleunigungsaufnehmer nach Anspruch 1 oder 2, **dadurch gekennzeichnet, daß** jedes Trägerteil (2a, 2b) aus einem über das Biegeelement (1) geführten balkenförmigen Teil (21) besteht, an das sich der Trägerfuß (22) anschließt.

4. Piezoelektrischer Beschleunigungsaufnehmer nach einem der vorangehenden Ansprüche, **dadurch gekennzeichnet, dass** die mechanische Verbindung zwischen dem Träger (2a, 2b) und dem Substrat (3) als Lötverbindung oder mittels eines elektrisch leitfähigen Klebers hergestellt wird.

5. Piezoelektrischer Beschleunigungsaufnehmer nach einem der Ansprüche 3 bis 4, **dadurch gekennzeichnet, daß** der Trägerfuß (22) des Trägerteiles (2a, 2b) gegenüber dessen balkenförmigen Teil (21) verbreitert ausgeführt ist.

6. Piezoelektrischer Beschleunigungsaufnehmer nach einem der vorangehenden Ansprüche, **dadurch gekennzeichnet, daß** das Biegeelement (1) als Bimorph-Biegesensor ausgebildet ist.

## Claims

1. Piezoelectric acceleration transducer, in particular for use in safety devices for motor vehicles, comprising a composite of a flexural element (1) made of piezoelectric material, which has outer electrodes and is held by a carrier (2) mounted on a substrate (3) in a position, in which the main sensitivity axis of the flexural element (1) lies in a plane parallel to the substrate (3), wherein the substrate (3) comprises means of establishing an electrical connection to contact points (6) disposed on the substrate, having the following features:
a) the carrier (2) comprises two carrier parts (2a, 2b) of a plate-shaped design, between which is disposed the flexural element (1), which has an outer electrode on each of its opposite sides,
b) each carrier part (2a, 2b) comprises a carrier foot (22) having an end face (8), which forms a free end of the carrier part (2a, 2b) and which with contact points (6) disposed on the substrate (3) forms a T-shaped mechanical butt joint,
c) the two carrier parts (2a, 2b) have an electrically conductive coating (7) in the region of contact with the outer electrodes of the flexural element (1),
d) for establishing the electrical connection to the substrate (3) the electrically conductive coating (7) on the carrier parts (2a, 2b) extends up to the point of mechanical contact of the carrier parts (2a, 2b) with the substrate (3) and
e) the mechanical contact points (6) on the substrate (3) are designed as electrical contact points.

2. Piezoelectric acceleration transducer, in particular for use in safety devices for motor vehicles, comprising a composite of a flexural element (1) made of piezoelectric material, which has outer electrodes and is held by a carrier (2), which is made of electrically conductive material and mounted on a substrate (3), in a position, in which the main sensitivity axis of the flexural element (1) lies in a plane parallel to the substrate, and the carrier (2) establishes an electrical connection to contact points (6) disposed on the substrate (3), having the following features:
a) the carrier (2) comprises two carrier parts (2a, 2b) of a plate-shaped design, between which is disposed the flexural element (1), which has an outer electrode on each of its opposite sides, and
b) each carrier part (2a, 2b) comprises a carrier foot (22) having an end face (8), which forms a free end of the carrier part (2a, 2b) and which with contact points (6) disposed on the substrate (3) forms a T-shaped mechanical butt joint.

3. Piezoelectric acceleration transducer according to claim 1 or 2, **characterized in that** each carrier part (2a, 2b) comprises a bar-shaped part (21), which extends over the flexural element (1) and is adjoined by the carrier foot (22).

4. Piezoelectric acceleration transducer according to one of the preceding claims, **characterized in that** the mechanical connection between the carrier (2a, 2b) and the substrate (3) is established in the form of a solder joint or by means of an electrically conductive adhesive.

5. Piezoelectric acceleration transducer according to one of claims 3 to 4, **characterized in that** the carrier foot (22) of the carrier part (2a, 2b) is realized in a widened manner compared to the bar-shaped part (21) thereof.

6. Piezoelectric acceleration transducer according to one of the preceding claims, **characterized in that** the flexural element (1) takes the form of a bimorph flexural sensor.

## Revendications

1. Capteur d'accélération piézo-électrique, en particulier pour l'utilisation dans des dispositifs de sécurité pour véhicules, constitué d'un élément composite formé d'un élément de flexion (1) en matériau piézo-électrique, présentant des électrodes extérieures, qui est maintenu en position par un support (2) monté sur un substrat (3), dans lequel l'axe de sensibilité principale de l'élément de flexion (1) se trouve dans un plan parallèle au substrat (3), le substrat (3) présentant des moyens en vue de la réalisation d'une liaison électrique avec des points de contact (6) disposés sur le substrat, avec les caractéristiques suivantes :
a) le support (2) se compose de deux parties de support (2a, 2b) réalisées sous forme de plaques entre lesquelles est disposé l'élément de flexion (1), qui présente respectivement sur son côté en vis-à-vis une électrode extérieure,
b) chaque partie de support (2a, 2b) comprend une base de support (22) avec un côté frontal (8) formant une extrémité libre de la partie de support (2a, 2b) qui forme avec des points de contact (6) disposés sur le substrat (3) une liaison mécanique bord à bord en forme de T,
c) les deux parties de support (2a, 2b) présentent dans la zone de contact avec les électrodes extérieures de l'élément de flexion (1) une couche (7) électriquement conductrice,
d) en vue de la réalisation de la liaison électrique avec le substrat (3), la couche (7) électriquement conductrice sur les parties de support (2a, 2b) s'étend jusqu'au point de contact mécanique des parties de support (2a, 2b) avec le substrat (3) et
e) les points de contact mécanique (6) sur le substrat (3) sont réalisés sous la forme de point de contact électrique.

2. Capteur d'accélération piézo-électrique, en particulier pour l'utilisation dans des dispositifs de sécurité pour véhicules, constitué d'un élément composite d'un élément de flexion (1) en matériau piézo-électrique, présentant des électrodes extérieures, qui est maintenu en position par un support (2) en matériau électriquement conducteur, monté sur un substrat (3), dans lequel l'axe de sensibilité principale de l'élément de flexion (1) se trouve dans un plan parallèle au substrat (3) et le support (2) réalise une liaison électrique avec des points de contact (6) disposés sur le substrat (3), avec les caractéristiques suivantes :
a) le support (2) se compose de deux parties de support (2a, 2b) réalisées sous forme de plaques, entre lesquelles est disposé l'élément de flexion (1), qui présente respectivement sur son côté en vis-à-vis une électrode extérieure, et
b) chaque partie de support (2a, 2b) comprend une base de support (22) avec un côté frontal (8) formant une extrémité libre de la partie de support (2a, 2b), qui forme avec des points de contact (6) disposés sur le substrat (3) une liaison mécanique bord à bord, en forme de T.

3. Capteur d'accélération piézo-électrique selon la revendication 1 ou 2, **caractérisé en ce que** chaque partie de support (2a, 2b) se compose d'une partie (21) en forme de barre s'étendant au-dessus de l'élément de flexion (1) à laquelle se raccorde la base du support (22).

4. Capteur d'accélération piézo-électrique selon une des revendications précédentes, **caractérisé en ce que** la liaison mécanique entre le support (2a, 2b) et le substrat (3) est réalisée par soudage ou à l'aide d'une colle électriquement conductrice.

5. Capteur d'accélération piézo-électrique selon une des revendications 3 ou 4, **caractérisé en ce que** la base (22) de la partie de support (2a, 2b) est élargie par rapport à la partie sous forme de barre (21) de celle-ci.

6. Capteur d'accélération piézo-électrique selon une des revendications précédentes, **caractérisé en ce que** l'élément de flexion (1) est réalisé sous la forme d'un capteur de flexion-bimorphe.
